Europäisches Patentamt

European Patent Office

Office européen des brevets

(11) Veröffentlichungsnummer: **0 430 314 A2**

## (12) EUROPÄISCHE PATENTANMELDUNG

(21) Anmeldenummer: 90124448.3

(22) Anmeldetag: 04.11.85

(51) Int. Cl.5: **C21D 1/76, C01B 3/04, C01B 3/22, C01B 3/38, B01J 7/00**

Diese Anmeldung is am 17 - 12 - 1990 als Teilanmeldung zu der unter INID-Kode 60 erwähnten Anmeldung eingereicht worden.

(30) Priorität: 08.11.84 DE 3440876

(43) Veröffentlichungstag der Anmeldung:
05.06.91 Patentblatt 91/23

(60) Veröffentlichungsnummer der früheren Anmeldung nach Art. 76 EPÜ: 0 180 953

(84) Benannte Vertragsstaaten:
AT BE DE FR GB IT NL Patentblatt

(71) Anmelder: **Linde Aktiengesellschaft**
**Abraham-Lincoln-Strasse 21**
**W-6200 Wiesbaden(DE)**

(72) Erfinder: **Strigl, Reinhard, Dipl.-Ing.**
**Zeitlerstrasse 1**
**W-8000 München 50(DE)**
Erfinder: **Majerus, Hubert, Dipl.-Ing.**
**Prinses Beatrixlaan 166**
**NL-2286 Rijswijk(NL)**
Erfinder: **Veranneman, Georg, Dipl.-Ing.**
**Flurstrasse 12**
**W-8023 Höllriegelskreuth(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) Verfahren und Einrichtung zum Herstellen einer Schutzgasatmosphäre.

(57) Die Erfindung betrifft ein Verfahren zur Herstellung einer Wasserstoff, Kohlenmonoxid und gegebenenfalls Stickstoff enthaltenden Atmosphäre oder auch einer Atmosphäre, die nur Stickstoff und Wasserstoff enthält, wobei die Atmosphäre durch katalytische Spaltung eines Einsatzfluides durch Kontakt mit einem Katalysator erzeugt wird und das gebildete Atmosphärengas dann einem Einsatzraum zugeführt wird, dessen Atmosphäre sich auf einer geeigneten Temperatur zur Behandlung von Einsatzgut befindet, und wobei der Katalysator in wärmeleitendem Kontakt mit dieser Atmosphäre im Einsatzraum steht.

Für eine optimale Temperatureinstellung des Katalysators wird dessen Temperatur einer Überwachung und Regelung unterzogen und zwar in der Weise, daß die Temperatur des Katalysators gemessen und diese anhand eines Vergleichs mit einem gewünschten Sollwert auf ihre Richtigkeit überprüft wird und diese gegebenenfalls im Sinn einer Anglei- chung des Meßwerts an den Sollwert geändert wird.

# VERFAHREN UND EINRICHTUNG ZUM HERSTELLEN EINER SCHUTZGASATMOSPHÄRE

Die Erfindung betrifft ein Verfahren zur Herstellung einer Wasserstoff, Kohlenmonoxid und gegebenenfalls Stickstoff enthaltenden Atmosphäre oder auch einer Atmosphäre, die nur Stickstoff und Wasserstoff enthält,
wobei die Atmosphäre durch katalytische Spaltung eines Einsatzfluids durch Kontakt mit einen Katalysator erzeugt wird und das gebildete Atmosphärengas dann einem Einsatzraum zugeführt wird, dessen Atmosphäre sich auf einer geeigneten Temperatur zur Behandlung von Einsatzgut befindet, und wobei der Katalysator in wärmeleitendem Kontakt mit dieser Atmosphäre im Einsatzraum steht, sowie eine zugehörige Einrichtung.

Schutzgase, die Kohlenmonoxid und/oder Stickstoff sowie Wasserstoff enthalten, werden für eine Vielzahl von Prozessen benötigt. Zur Wärmebehandlung von Metallen ist es z.B. unter anderem bekannt, als Schutzgas ein in einem Generator durch Verbrennen eines Kohlenwasserstoffes hergestelltes Gas, das sogenannte Exogas zu verwenden. Dieses Gas weist jedoch einige Nachteile auf, beispielsweise beim Rekristallisationsglühen von Halbzeugen aus Stahl, Kupfer oder Messing, da es entkohlend und leicht oxidierend wirkt. Diese Nachteile werden vermieden, wenn als Schutzgas eine Mischung aus Stickstoff und Methanolspaltgas verwendet wird. Zu dessen Herstellung wird Methanol in Spaltanlagen, die außerhalb des Ofens angeordnet sind, gespalten. Es handelt sich dabei um Hochtemperaturspaltanlagen, in denen das Methanol auf Temperaturen erhitzt wird, die einen thermischen Zerfall des Methanols bewirken. Es sind jedoch auch Niedertemperaturspaltanlagen für Methanol bekannt, in denen das Methanol katalytisch in Kohlenmonoxid und Wasserstoff gespalten wird. Da Methanolspaltgas meist nur bei Temperaturen unter ca 1170 K (900 ˚ C) benötigt wird, sind die besagten Spaltanlagen oft unumgänglich. Bei höheren Temperaturen kann Methanol direkt (in flüssigem Zustand) in den Einsatzraum eingespeist werden. So ist es z.B. bekannt, das Einsatzfluid einem Wirbelbettofen direkt zuzuführen. Andrerseits ist auch bekannt, die Spaltung in einem Mantelstrahlrohr durchzuführen, das sich innerhalb eines Wärmebehandlungsofens befindet.

Die bekannten Verfahren weisen also den Nachteil auf, daß sie entweder nur für spezielle Anwendungsfälle geeignet sind oder relativ kompliziert oder unwirtschaftlich sind.

Zum Beispiel ist die Herstellung eines Schutzgases durch Spaltung eines Einsatzfluides in einem beheizten Mantelstrahlrohr zwar ein wirtschaftliches Verfahren, jedoch muß dieses Mantelstrahlrohr aus der Regelung für die Ofenheizung herausgenommen und gesondert geregelt werden. Außerdem besteht die Gefahr, daß an kälteren Stellen des als Spaltrohr wirkenden Mantelstrahlrohres Ruß ausfällt oder korrosive Zwischenprodukte, z.B. Formaldehyd, entstehen.

Der Erfindung liegt daher die Aufgabe zugrunde, ein moglichst mängelfreies, wirtschaftliches, trotzdem einfaches und universell einsetzbares Verfahren der eingangs geschilderten Art sowie eine zur Durchführung des Verfahrens geeignete Vorrichtung anzugeben.

Diese Aufgabe wird erfindungsgemäß dadurch gelöst, daß die Temperatur des Katalysators einer Überwachung und Regelung unterzogen wird und zwar in der Weise, daß die Temperatur des Katalysators gemessen und diese anhand eines Vergleichs mit einem gewünschten Sollwert auf ihre Richtigkeit überprüft wird und gegebenfalls im Sinn einer Angleichung des Meßwerts an den Sollwert geändert wird.

Die Angleichung des Meßwertes an den Sollwert kann erfolgen:

a) Durch Ändern der Wärmezufuhr zum Einsatzfluid,

b) Durch Ändern der Wärmezufuhr zum Inertgas, das einen Anteil des Einsatzfluids darstellt,

c) Durch Ändern des dem Einsatzfluid zugemischten Inertgasanteils,

d) Bei einem mittels Strahlrohren erhitzten Einsatzraum durch Regelung der Temperatur der dem Katalysator benachbarten Strahlrohre,

e) Bei einem innerhalb eines die Wand des Einsatzraumes durchsetzenden Kanals angeordneten Katalysator durch Ändern der Position des Katalysators innerhalb des Kanals,

f) Bei einem gemäß Maßnahme e) angeordneten Katalysator durch Einleiten eines Inertgases, insbesondere von Stickstoff, in den Raum zwischen Katalysatorgehäuse und Kanalwand.

Grundsätzlich ist es zwar möglich, das erfindungsgemäße Verfahren manuell auszuführen. Besonders vorteilhaft ist jedoch, die Temperatur des Katalysators automatisch zu regeln. Grundsätzlich eignet sich zur erfindungsgemäßen Herstellung einer CO + H₂-haltigen Atmosphäre jede organische Verbindung, die katalytisch in Kohlenmonoxid und Wasserstoff gespalten werden kann. Bevorzugt wird jedoch eine organische Flüssigkeit - wegen der Verfügbarkeit und relativ geringen Herstellungskosten insbesondere Methanol - verwendet. Dabei hat es sich als zweckmäßig erwiesen, die organische Flüssigkeit bzw. das Methanol vor dem Einleiten in den Katalysator zu verdampfen und gegebenenfalls zu überhitzen.

In einer vorteilhaften weiteren Variante der Erfindung wird der organischen Flüssigkeit Wasser zugemischt und das Gemisch z.B. uber einen Edelmetallkatalysator geleitet, der auf einem Temperaturniveau im Bereich zwischen 623 K (350 °C) und 1123 K (850 °C) gehalten wird. Auf diese Weise kann ein kostengünstiges Schutzgas (sogenanntes Exogas) hergestellt werden, das zum Nitrokarburieren, zum Tempern von Gußeisen oder zum Entkohlen verwendet werden kann.

Wird der organischen Flüssigkeit Stickstoff zugemischt, so wird nach einer vorteilhaften Variante der Erfindung das Verhältnis der Flüssigkeitsmenge zur Stickstoffmenge so gewählt, daß sich im Einsatzraum ein Kohlenmonoxidgehalt zwischen 1 Vol.% und 30 Vol% einstellt.

Zur Herstellung einer aus Stickstoff und Wasserstoff bestehenden Schutzgasatmosphäre kann erfindungsgemäß Ammoniak, das wiederum bei geeigneten Temperaturen einem Katalysator zugeführt wird, verwendet werden. Das erfindungsgemäße Verfahren ist so zum Beispiel zur Herstellung der Schutzgasatmosphäre für das Glühen von Rohren in Rollenherddurchlauföfen geeignet. Dabei kann beispielsweise ein Autoabgaskatalysator - gegebenenfalls auch zwei oder mehrere Autoabgaskatalysatoren - anstelle eines Strahlrohres in den entsprechenden Kanal eingesetzt werden.

Es muß aber nicht unbedingt ein Strahlrohr gezogen werden, das Schutzgas kann auf die erfindungsgemäße Weise auch an anderen Stellen des Einsatzraumes, an denen kein Temperatureinbruch auftritt, erzeugt werden. Das Verfahren ist auch in anderen Einsatzräumen als bei Rollenherdöfen, wie z.B. in Kammeröfen, Topföfen, Drehtrommelöfen, Drehherdöfen und Haubenöfen z.B. zum Glühen von Blechcoils, einsetzbar.

In einer anderen vorteilhaften Variante der Erfindung wird als Einsatzfluid ein Gemisch aus Erdgas und Luft verwendet. Dabei hat sich z.B. bei einer Gesamtschutzgasmenge von rund 170 m³/h ein Erdgasanteil von ca. 3 m³/h und ein Luftanteil von ca. 7,2 m³/h (Rest Stickstoff) besonders bewährt. Die Katalysatortemperatur ist in diesem Fall auf ca. 1193 K (920 °C) einzustellen.

Nach einer weiteren vorteilhaften Variante der Erfindung wird der Katalysator zusätzlich durch das abgefackelte Abgas aus einem anderen Ofen (z.B. aus einem Topfofen oder einem Mehrzweckkammerofen) beheizt.

Eine Wärmebehandlungseinrichtung, die zur Durchführung des erfindungsgemäßen Verfahrens geeignet ist, besitzt einen mit Katalysatormasse gefüllten, aus wärmeleitendem Material bestehenden Behälter innerhalb des Einsatzraumes, wobei der Behälter wenigstens eine in den Einsatzraum mündende Öffnung besitzt und in den Behälter eine Zufuhrleitung für das Einsatzfluid mündet.

Das kennzeichnende Merkmal der Einrichtung besteht darin, daß innerhalb des Behälters für die Katalysatormasse ein Temperaturmeßfühler im Bereich des in den Einsatzraum weisenden Endes des Behälters angeordnet ist.

In einer vorteilhaften Ausgestaltung ist der Katalysatorbehälter im wesentlichen innerhalb eines die Wand des Einsatzraumes der Einrichtung durchsetzenden Kanals mit Abstand zur Kanalwand angeordnet.

Durch die Wand des Einsatzraumes wird der Katalysator wenigstens teilweise gegen den Innenraum abgeschirmt, so daß die Temperatur des Katalysators durch eine entsprechende Positionierung des Katalysators innerhalb des Kanals beeinflußt werden kann.

In den zwischen Kanalwand und Katalysatorgehäuse gebildeten Raum (im Falle eines zylindrischen Kanals und eines zylindrischen Katalysatorgehäuses ist dieser Raum ein Ringraum) kann nach einer bevorzugten weiteren Ausgestaltung der Erfindung eine Leitung für die Zufuhr eines Kühlfluids von außerhalb des Einsatzraumes münden. Dies dient zur Kühlung des Katalysators beispielsweise mit Stickstoff. Über die zeitlich strömende Kühlmittelmenge kann die Temperatur des Katalysators innerhalb des gewünschten Temperaturbereichs gehalten werden.

Die Erfindung soll nun anhand von Ausführungsbeispielen weiter erläutert werden.

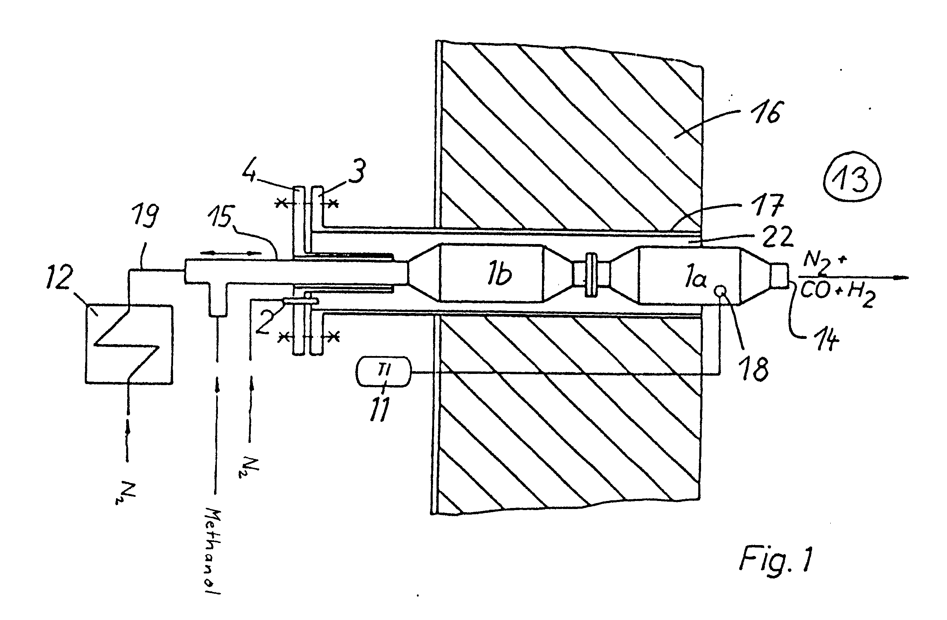

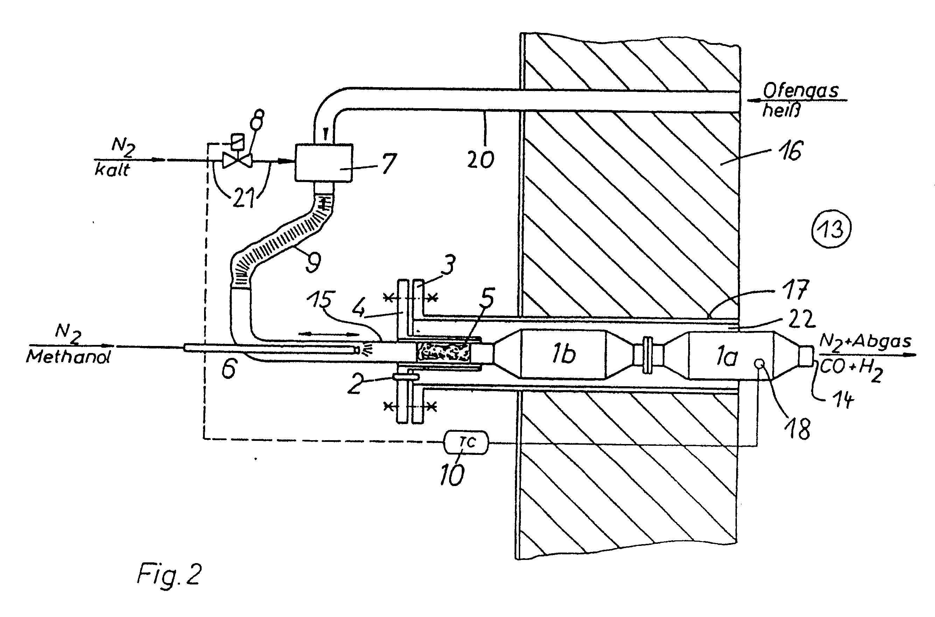

In den Figuren 1 und 2 sind zwei Varianten der Erfindung dargestellt. Übereinstimmende Bauteile wurden mit denselben Bezugsziffern versehen.

Ein Einsatzraum einer entsprechenden Wärmebehandlungseinrichtung, im Ausführungsbeispiel der Innenraum 13 eines Rollenherddurchlaufofens, wird von einer Wand 16 begrenzt. In den Figuren sind nur kleine Ausschnitte des Ofeninnenraumes 13 und der Wand 16 dargestellt. Von der Wand 16 ist ein Schnitt durch einen Bereich dargestellt, in dem ein Strahlrohr innerhalb eines Kanals 17 (Strahlrohrbefestigung) angeordnet war. Dieses Strahlrohr ist gezogen und in den Kanal 17 ein z.B. aus zwei Autoabgaskatalysatoren 1a und 1b bestehendes System eingeführt worden. Mittels Flanschen 3,4 wird der Ofeninnenraum gegenüber der Außenatmosphäre abgedichtet. Die beiden Autoabgaskatalysatoren 1a und 1b sind mittels Schrauben aneinander befestigt und so angeordnet, daß das Katalysatorgehäuse mit dem koaxial dazu verlaufenden Kanal 17 einen ringförmigen Raum 22 bildet. Der Innenraum der Autoabgaskatalysatoren, in dem sich die eigentliche Katalysatorsubstanz befindet, ist an eine Zufuhrleitung 15, die den Flansch 4 durchsetzt, angeschlossen. Die Mündung,aus der das Schutzgas aus dem Autoabgaskatalysator austritt, trägt das Bezugszeichen 14. In den Ringraum 22 mündet eine Leitung 2, über die Stickstoff zur Kühlung der Katalysatorgehäuse eingeleitet werden kann.

An dem am weitesten innerhalb des Ofens angeordneten Katalysator ist ein Temperaturmeßfühler, im Ausführungsbeispiel ein Thermoelement 18 angeordnet, das außerhalb des Ofens an eine Temperaturanzeige 11 oder einen Temperaturregler 10 angeschlossen ist.

Gemäß Figur 1 mündet in die Zufuhrleitung 15 über eine nicht näher dargestellte Mischvorrichtung eine Zufuhrleitung für Methanol und für Stickstoff 19. Mit 12 ist eine Heizvorrichtung bezeichnet, in der der Stickstoff vorgewärmt werden kann. Im Ausführungsbeispiel sind Autoabgaskatalysatoren auf Platin -oder Palladiumbasis verwendet. Diese Katalysatoren bewirken eine optimale Spaltung z.B. des Methanols im Temperaturbereich zwischen 573 K (300°C) und ca. 613 K (340°C). Daher wird der am weitesten im Ofen befindliche Katalysator 1a so positioniert, daß dessen Temperatur etwa bei 600 K (327°C), maximal 613 K, lieht. Über das Thermoelement 18 wird diese Temperatur überwacht. Den beiden Autoabgaskatalysatoren 1a und 1b werden dabei zunächst konstante Mengen von vorverdampftem Methanol und Stickstoff zugeführt. Das Gemisch aus Methanol und Stickstoff soll nach Möglichkeit ebenfalls eine Temperatur von ca. 600 K (327°C) besitzen, spätestens jedoch beim Durchströmen des Autoabgaskatalysators 1a vollständig diese Temeratur angenommen haben. Das Temperaturniveau des Katalysators von ca. 600 K kann nun auf eine der folgenden Weisen konstant gehalten werden:

1. Durch Vor- oder Zurückziehen der Zufuhrleitung 15 und damit der Autoabgaskatalysatoren 1a und 1b im Gegenflansch 4.
2. Durch Veränderung des Stickstoffanteiles am Methanoldampfstrom.
3. Durch Überhitzung des Methanoldampfes.
4. Durch Verwärmung des Stickstoffstromes über Wärmetauscher 12, der beispielsweise durch das Abgas eines Ofens beheizt werden kann.
5. Durch Regelung der Temperatur benachbarter Strahlrohre.
6. Durch Kühlung mittels Stickstoffzuleitung in den Rinraum 22 über Leitung 2.

Eine weitere bevorzugte Ausführungsform der Erfindung ist in Figur 2 dargestellt. Über eine die Ofenwand 16 durchsetzende Leitung 20 wird aus dem Ofeninnenraum 13 heißes Gas abgezogen. Dazu dient ein Injektor 7, dem über eine Leitung 21 mit einem Regulierventil 8 kalter, gasförmiger Stickstoff als Saugstrom zugeführt wird. Durch diesen Stickstoffstrom wird Gas aus dem Ofen angesaugt und über ein Wellrohr 9 der Zufuhrleitung 15 zugeführt. Das Verhältnis der Stickstoffmenge zur Abgasmenge beträgt etwa 1 : 4. In die Zufuhrleitung 15 mündet eine weitere Leitung 6 für ein Stickstoff-Methanol-Gemisch. Leitung 6 und Leitung 15 sind koaxial zueinander angeordnet, so daß Leitung 15 die Leitung 6 mit Abstand umgibt.

In diesem Ausführungsbeispiels kann flüssiges oder vorverdampftes Methanol mit Stickstoff über Leitung 6 in Leitung 15 eingedüst werden. Der vorderste Autoabgaskatalysator 1a ist wie im vorhergehenden Ausführungsbeispiel so positioniert, daß er ohne Begasung auf 573 bis 613 K (300 bis 340°C) aufgeheizt wird. Das Gemisch aus Stickstoff, Ofenabgas und Methanol wird über einen z.B. mit Stahlwolle 5 gefüllten Raum geleitet, in dem Methanol vollständig verdampft. Über das Thermoelement 18 und die Regeleinheit 10 wird die Stellung des Regulierventils 8 in der Zuleitung 21 des Stickstoffs in die Ofenabzugsleitung 20 und damit die Stickstoffzufuhr zum Injektor 7 so geregelt, daß das Gemisch aus Ofenabgas, Stickstoff und Methanol mit ca. 573 K bis 613 K in den Autoabgaskatalysator 1b eintritt.

## Ansprüche

1. Verfahren zur Herstellung einer Wasserstoff, Kohlenmonoxid und gegebenenfalls Stickstoff enthaltenden Atmosphäre oder auch einer Atmosphäre, die nur Stickstoff und Wasserstoff enthält,
   wobei die Atmosphäre durch katalytische Spaltung eines Einsatzfluids durch Kontakt mit einem Katalysator erzeugt wird
   und das gebildete Atmosphärengas dann einem Einsatzraum zugeführt wird, dessen Atmosphäre sich auf einer geeigneten Temperatur zur Behandlung von Einsatzgut befindet, und wobei der Katalysator in wärmeleitendem Kontakt mit dieser Atmosphäre im Einsatzraum steht,
   dadurch gekennzeichnet,
   daß die Temperatur des Katalysators einer Überwachung und Regelung unterzogen wird und zwar in der Weise,
   daß die Temperatur des Katalysators gemessen und diese anhand eines Vergleichs mit einem gewünschten Sollwert auf ihre Richtigkeit überprüft wird und diese gegebenfalls im Sinn einer Angleichung des Meßwerts an den Sollwert geändert wird.

2. Verfahren nach Anspruch 1 dadurch gekennzeichnet, daß die Temperatur des Katalysators durch eine der folgenden Maßnahmen im Sinn einer Angleichung des Meßwertes an den Sollwert geändert wird:

    a)    Durch Ändern der Wärmezufuhr zum Einsatzfluid,

    b)    Durch Ändern der Wärmezufuhr zum Inertgas, das einen Anteil des Einsatzfluids darstellst,

    c)    Durch Ändern des dem Einsatzfluid zugemischten Inertgasanteils,

    d)    Bei einem mittels Strahlrohren erhitzten Einsatzraum durch Regelung der Temperatur der dem Katalysator benachbarten Strahlrohre,1

    e)    Bei einem innerhalb eines die Wand des Einsatzraumes durchsetzenden Kanals angeordneten Katalysator durch Ändern der Position des Katalysators innerhalb des Kanals,

    f)    Bei einem gemäß Maßnahme e) angeordneten Katalysator durch Einleiten eines Inertgases, insbesondere von Stickstoff, in den Raum zwischen Katalysatorgehäuse und Kanalwand.

3. Verfahren nach Anspruch 2, dadurch gekennzeichnet, daß die Temperaturregelung des Katalysators automatisch ausgeführt wird.

4. Verfahren nach einem der Ansprüche 1 bis 3, dadurch gekennzeichnet, daß das Einsatzfluid eine organische Flüssigkeit ist, die katalytisch nahezu vollständig in Kohlenmonoxid und Wasserstoff spaltbar ist.

5. Verfahren nach Anspruch 4, dadurch gekennzeichnet, daß das Einsatzfluid ein Alkohol, insbesondere Methanol ist.

6. Verfahren nach einem der Ansprüche 4 oder 5, dadurch gekennzeichnet, daß die organische Flüssigkeit vor dem Einleiten in den Katalysator verdampft und gegebenenfalls überhitzt wird.

7. Verfahren nach einem der Ansprüche 4 bis 6,dadurch gekennzeichnet, daß der Katalysator in einem Temperaturbereich zwischen 573 und 613 K (300 bis 340 °C) gehalten wird.

8. Verfahren nach einem der Ansprüche 4 bis 6 mit einem Edelmetallkatalysator, dadurch gekennzeichnet, daß der organischen Flüssigkeit Wasser zugesetzt wird und der Katalysator in einem Temperaturbereich zwischen 623 K und 1123 K gehalten wird.

9. Verfahren nach einem der Ansprüche 4 bis 6, wobei der organischen Flüssigkeit Stickstoff zugemischt wird, dadurch gekennzeichnet, daß das Verhältnis der Flüssigkeits- und der Stickstoffmenge so gewählt wird, daß sich im Einsatzraum ein Kohlenmonoxidgehalt zwischen 1 Vol.% und 30 Vol.% einstellt.

10. Verfahren nach einem der Ansprüche 1 bis 3, dadurch gekennzeichnet, daß das Einsatzfluid Ammoniak ist.

11. Verfahren nach einem der Ansprüche 1 bis 3, dadurch gekennzeichnet, daß das Einsatzfluid ein Gemisch aus Erdgas und Luft ist.

12. Wärmebehandlungseinrichtung zur Durchführung des Verfahrens nach einem der Ansprüche 1 bis 11 mit einem Einsatzraum und mit einem mit Katalysatormasse gefüllten, aus wärmeleitendem Material bestehender Behälter (1), der innerhalb des Einsatzraumes (13) angeordnet ist, wobei der Behälter (1) wenigstens eine in den Einsatzraum (13) mündende Öffnung (14) besitzt und in den Behälter (1) eine Zufuhrleitung (15) für das Einsatzfluid mündet, dadurch gekennzeichnet, daß innerhalb des Behälters (1) ein Temperaturmeßfühler (18) im Bereich des in den Einsatzraum (13) weisenden Endes des Behälters (1) angeordnet ist.

Fig. 1

EP 0 430 314 A2

Fig. 2